# EUROPÄISCHE PATENTANMELDUNG

(11) **EP 4 477 923 A1**
(43) Veröffentlichungstag der Anmeldung: **18.12.2024**
(21) Anmeldenummer: 22925278.8
(22) Anmeldetag: 08.02.2022
(51) Int. Cl.: F16J 15/3296, F16J 15/3204, F16J 15/3208, F16J 15/3256

(54) **DICHTUNGSVORRICHTUNG**

(71) Anmelder: Schaeffler Technologies AG & Co. KG, 91074 Herzogenaurach (DE)
(72) Erfinder: LIU, Xin, Shanghai 201805 (CN); WU, Lijuan, Suzhou, Jiangsu 215021 (CN); WEI, Lai, Shanghai 201804 (CN); WEI, Jianfei, Shanghai 201805 (CN)
(86) Internationale Anmeldenummer: PCT/CN2022/075535
(87) Internationale Veröffentlichungsnummer: WO 2023/150913

(57) **Zusammenfassung**

Eine Dichtungsvorrichtung, umfassend einen Dichtungsring (30), umfassend eine Dichtungslippe, die aus einem isolierenden elastischen Material zusammengesetzt ist und zum Bilden einer dynamischen Abdichtung in Bezug auf eine leitfähige Komponente (50) verwendet wird; einen Stützkörper (11, 21) aus Metall, der entlang der Umfangsrichtung des Dichtungsrings verteilt an dem Dichtungsring befestigt ist und eine Radialkraft an der Dichtungslippe gegen die leitfähige Komponente bereitstellt; und eine erste Erkennungseinheit (10), umfassend zwei erste Stützkörper (11) in dem Stützkörper, erste Kabel (12), die jeweils elektrisch mit den entsprechenden ersten Stützkörpern verbunden sind, und eine Schleifenerkennungsvorrichtung (13), die elektrisch mit den ersten Kabeln verbunden ist, wobei die ersten Stützkörper derart an dem Dichtungsring angeordnet sind, dass radiale Enden (111) der ersten Stützkörper nahe der leitfähigen Komponente an der Dichtungslippe mit dem isolierenden elastischen Material bedeckt sind und nach Verschleiß der Dichtungslippe direkt mit der leitfähigen Komponente in Kontakt treten können, sodass nach einem vorbestimmten Verschleiß der Dichtungslippe die zwei ersten Stützkörper, die leitfähige Komponente, die Schleifenerkennungsvorrichtung und die ersten Kabel gemeinsam eine Kommunikationsschleife bilden, die von der Schleifenerkennungsvorrichtung erkannt werden kann.

## Beschreibung

### Technisches Gebiet

Die vorliegende Anmeldung betrifft das technische Gebiet von Dichtungen. Die vorliegende Anmeldung betrifft speziell eine Dichtungsvorrichtung, die insbesondere für ein Windturbinenlager verwendet wird.

### Technischer Hintergrund

Windturbinenlager sind wichtige Bestandteile von Windturbinengeneratoren. Um einen stabilen Betrieb der Windturbinengeneratoren zu ermöglichen, müssen die Windturbinenlager abgedichtet sein. Zurzeit werden als herkömmliche Dichtungskonstruktionen an Windturbinenlagern Gummidichtungsringe mit Gewebe verwendet und die Dichtungsringe sind mit Dichtungslippen zum Bilden einer dynamischen Abdichtung ausgebildet. Da die Drehgeschwindigkeiten der Windflügellager jedoch zu niedrig sind, kann diese Art von Dichtungsvorrichtung nicht die Pumpwirkung typischer Öldichtungen erzielen. Daher ist die Dichtungswirkung mangelhaft. Darüber hinaus sind die Windflügellager groß und Durchmesser davon können zwischen einem Meter und über zehn Metern liegen. Einerseits können bestehende Dichtungsvorrichtungen aufgrund einer hohen Exzentrizität und mangelnder Flexibilität daher nicht gut auf große Windturbinenlager abgestimmt werden; und andererseits ist auch die Lösung, bei der eine Federspirale zum Bereitstellen einer Radialkraft verwendet wird, um das Problem der Exzentrizität zu lösen und die Dichtungswirkung zu verbessern, bei großen Lagern nicht anwendbar.

Des Weiteren ist eine wirksame Zustandsüberwachung der Windturbinenlager und ihrer Dichtungsvorrichtungen von großer Bedeutung, um den sicheren und stabilen Betrieb der Windturbinengeneratoren zu gewährleisten. Zu diesem Zweck ist das Anbringen einer Vielfalt von Sensoren an den Windturbinenlagern notwendig, um Zustandsinformationen, wie Temperaturen, Vibrationen, Verschleiß und Verschiebungen der Lager und Dichtungsvorrichtungen, zu erfassen. Da die Lager jedoch eine komplexe Konstruktion aufweisen und die meisten Komponenten davon Metallkomponenten sind, ist es schwierig, geeignete Sensormontagestellen an den Lagerbauteilen zu finden. Dichtungsringe aus Gummi weisen dagegen eine geringe Steifigkeit auf und verdrehen und verformen sich leicht. Somit sind die Dichtungsringe auch zur Befestigung der Sensoren ungeeignet.

### Kurzdarstellunq der Erfindung

Daher besteht die Aufgabe der vorliegenden Anmeldung darin, eine Dichtungsvorrichtung bereitzustellen, die bei großen Lagern, wie Windturbinenlagern, anwendbar ist. Die Dichtungsvorrichtung kann eine gute Dichtungswirkung bereitstellen und vorzugsweise die Überwachung von Betriebszustandsinformationen eines Windturbinenlagers und einer Dichtungsvorrichtung davon unterstützen.

Die vorstehend genannte Aufgabe wird durch eine Dichtungsvorrichtung gelöst. Die Dichtungsvorrichtung umfasst: einen Dichtungsring, umfassend eine Dichtungslippe, die aus einem isolierenden elastischen Material zusammengesetzt ist und zum Bilden einer dynamischen Abdichtung in Bezug auf eine leitfähige Komponente verwendet wird; Stützkörper aus Metall, wobei die Stützkörper entlang einer Umfangsrichtung des Dichtungsrings verteilt am Dichtungsring befestigt sind und Radialkräfte an der Dichtungslippe gegen die leitfähige Komponente bereitstellen; und eine erste Erkennungseinheit, umfassend zwei erste Stützkörper in den Stützkörpern, erste Kabel, die jeweils elektrisch mit den entsprechenden ersten Stützkörpern verbunden sind, und eine Schleifenerkennungsvorrichtung, die elektrisch mit jedem ersten Kabel verbunden ist, wobei die ersten Stützkörper derart an dem Dichtungsring angeordnet sind, dass radiale Enden der ersten Stützkörper nahe der leitfähigen Komponente an der Dichtungslippe mit einem isolierenden elastischen Material bedeckt sind und die leitfähige Komponente nach Verschleiß der Dichtungslippe direkt mit der leitfähigen Komponente in Kontakt treten kann, sodass nach einem vorbestimmten Verschleiß der Dichtungslippe die zwei ersten Stützkörper, die leitfähige Komponente, die Schleifenerkennungsvorrichtung und die ersten Kabel gemeinsam eine Kommunikationsschleife bilden, die von der Schleifenerkennungsvorrichtung erkannt werden kann.

Dabei wird die Dichtungsvorrichtung vorzugsweise zur Abdichtung zwischen zwei in Bezug aufeinander drehende Komponenten verwendet. Dabei kann die Dichtungsvorrichtung auf einer der Komponenten befestigt sein, insbesondere mittels Presspassung befestigt sein, und mit der vorstehend erwähnten Dichtungslippe des Dichtungsrings davon an der anderen Komponente, d. h. der leitfähigen Komponente, anliegen, wodurch eine kontaktartige dynamische Abdichtung in Bezug auf die andere Komponente, d. h. die leitfähige Komponente, gebildet wird.

Im Rahmen des Schutzumfangs ist der Dichtungsring mindestens im Bereich der vorstehend erwähnten Dichtungslippe, die mittels der Stützkörper gegen die leitfähige Komponente gedrückt wird, aus einem isolierenden elastischen Material, vorzugsweise Gummi, zusammengesetzt. Vorzugsweise ist der Dichtungsring vorwiegend aus Gummi. Die Anzahl von Dichtungslippen des Dichtungsrings ist hierin nicht beschränkt. Neben der vorstehend erwähnten Dichtungslippe, die mittels der Stützkörper an der leitfähigen Komponente anliegt, kann der Dichtungsring ferner mit weiteren Dichtungslippen ausgebildet sein, und die weiteren Dichtungslippen können eine kontaktartige oder kontaktlose Abdichtung zur leitfähigen Komponente bilden. Zur Vereinfachung der Darstellung wird im Folgenden, sofern nicht anders angegeben, mit Dichtungslippe die Dichtungslippe bezeichnet, die mittels der Stützkörper mit der leitfähigen Komponente in Kontakt steht.

Als leitfähige Komponente wird im Rahmen des Schutzumfangs eine Komponente verstanden, die zusammen mit der vorstehend erwähnten Dichtungslippe eine dynamische Abdichtung bildet. Dabei ist die leitfähige Komponente vorzugsweise eine Komponente aus leitfähigem Metall oder eine Komponente, die mindestens auf einer die dynamische Abdichtung bildenden Oberfläche mit einer leitfähigen Beschichtung beschichtet ist.

Dabei umfasst die Dichtungsvorrichtung eine Vielzahl von Stützkörpern aus Metall, die entlang der Umfangsrichtung verteilt sind. In radialer Richtung des Dichtungsrings weisen die Stützkörper jeweils ein der leitenden Komponente als Ganzes nahes radiales Ende, d. h. ein erstes radiales Ende, und ein von der leitenden Komponente als Ganzes entferntes radiales Ende, d. h. ein zweites radiales Ende, auf. Vorzugsweise sind die Stützkörper auf dem Dichtungsring vorzugsweise aus Gummi durch Vulkanisation befestigt. Vorzugsweise sind die Stützkörper teilweise oder vollständig mit dem isolierenden elastischen Material bedeckt. Die Stützkörper stellen mittels ihrer eigenen Konstruktion vorzugsweise Radialkräfte an dem Dichtungsring gegen eine Komponente auf einer radial äußeren Seite bereit, wie einem Lageraußenring, und eine Komponente auf einer radial inneren Seite, wie einem Lagerinnenring. In diesem Fall kann die Dichtungslippe des Dichtungsrings stabil an der leitfähigen Komponente anliegen, wodurch die Dichtungswirkung verbessert werden kann. Vorzugsweise ist die Vielzahl von Stützkörpern gleichmäßig entlang der Umfangsrichtung an dem Dichtungsring verteilt. Dabei wird das Bereitstellen von Federspiralen gemäß dem Stand der Technik vermieden und der Herstellungsprozess vereinfacht. Da darüber hinaus die Vielzahl von Stützkörpern in Umfangsrichtung des Dichtungsrings bereitgestellt ist, kann die Dichtungsvorrichtung besser an große Lager, wie Windflügellagern, abgestimmt werden, wodurch das potenzielle Problem der Exzentrizität bei Anwendungen der großen Lager verringert oder sogar vermieden wird.

Dabei umfasst die Dichtungsvorrichtung erste Erkennungseinheiten. Die ersten Erkennungseinheiten werden insbesondere dazu verwendet, einen Verschleißgrad der Dichtungslippe zu erkennen. Die ersten Erkennungseinheiten umfassen jeweils zwei besonders ausgestaltete und angeordnete Stützkörper, d. h. zwei erste Stützkörper. Dabei sind erste radiale Enden der ersten Stützkörper an einer Lippenöffnung der Dichtungslippe angeordnet, wobei die ersten radialen Enden der ersten Stützkörper bei Auslieferung der Dichtungsvorrichtung ab Werk oder in einem frühen Stadium der Nutzungsdauer der Dichtungsvorrichtung mit dem isolierenden elastischen Material, das die Dichtungslippe bildet, bedeckt sind oder in das isolierende elastische Material der Dichtungslippe eingebettet sind, sodass mindestens ein erster Stützkörper, vorzugsweise zwei erste Stützkörper, bei Kontakt der Dichtungslippe mit der leitfähigen Komponente gegenüber der leitfähigen Komponente isoliert ist. In diesem Fall ist das isolierende elastische Material an den ersten radialen Enden der ersten Stützkörper derart ausgestaltet, dass nach einem vorbestimmten Verschleiß der Dichtungslippe die entsprechenden ersten radialen Enden der zwei ersten Stützkörper jeweils direkt mit der leitfähigen Komponente in Kontakt treten und so einen leitfähigen Pfad bilden können. Dabei kann mittels der Schleifenerkennungsvorrichtung erkannt werden, ob die zwei ersten Stützkörper und die zwischen den zwei ersten Stützkörpern angeordnete leitfähige Komponente einen leitfähigen Pfad bilden, wodurch bestimmt wird, ob der Dichtungsring einen Verschleißfehler aufweist, oder eine Möglichkeit eines Verschleißfehlers bestimmt wird; und dann rechtzeitig entsprechende Maßnahmen ergriffen werden können. Es ist zu beachten, dass die spezifische Lösung der Schleifenerkennungsvorrichtung hierin nicht beschränkt ist. Der Fachmann kann die Schleifenerkennungsvorrichtung gemäß dem Stand der Technik in jeder sinnvollen Weise ausgebildet, um einen Aus- oder Ein-Zustand eines Stromkreises zu erkennen. In einigen möglichen Implementierungen ist die Schleifenerkennungsvorrichtung in einer Anlage angeordnet, in der sich die Dichtungsvorrichtung befindet, wie einem Windturbinengenerator. In einigen möglichen Implementierungen umfasst die Schleifenerkennungsvorrichtung ferner ein drahtloses Kommunikationsmodul zum Übertragen von Informationen zum Verschleißzustand des Dichtungsrings, wodurch eine Fernüberwachung beispielsweise einer Dichtungsvorrichtung eines Windturbinenlagers implementiert werden kann. Dabei kann unter Verwendung der Stützkörper, welche die Radialkräfte an dem Dichtungsring bereitstellen, ein Verschleißzustand der Dichtungslippe überwacht werden, was das zusätzliche Bereitstellen einer Verschleißerkennungsvorrichtung vermeidet und die Vereinfachung einer Gesamtkonstruktion der Dichtungsvorrichtung erleichtert.

In einer vorteilhaften Implementierung ist die Dichtungslippe an der radial inneren Seite des Dichtungsrings ausgebildet. In diesem Fall kann die Dichtungsvorrichtung, insbesondere ein Kopf des Dichtungsrings, an einer Komponente, die an der radial äußeren Seite der Dichtungsvorrichtung angeordnet ist, wie dem Lageraußenring, oder einem Gehäuse, wie einem Lagersitz, fest angebracht sein, und die Dichtungslippe des Dichtungsrings steht mit der leitfähigen Komponente an der radial inneren Seite, wie dem Lagerinnenring, oder einem Wellenelement in Kontakt.

In einer alternativen Implementierung ist die Dichtungslippe an der radial äußeren Seite des Dichtungsrings ausgebildet. In diesem Fall kann die Dichtungsvorrichtung, insbesondere der Kopf des Dichtungsrings, an einer Komponente an der radial inneren Seite der Dichtungsvorrichtung, wie dem Lagerinnenring oder dem Wellenelement, fest angebracht sein, und die Dichtungslippe des Dichtungsrings steht mit der leitfähigen Komponente an der radial inneren Seite, wie dem Lageraußenring, oder einem Gehäuse, wie dem Lagersitz, in Gleitkontakt.

In einer bevorzugten Implementierung umfasst der Dichtungsring ferner einen Gewebeabschnitt, wobei der Gewebeabschnitt an einem radialen Ende des Dichtungsrings entfernt von der leitfähigen Komponente angeordnet ist. Somit kann die Festigkeit des Dichtungsrings mittels des Fasergewebes des Gewebeabschnitts erhöht werden und die Montage des Dichtungsrings wird erleichtert.

In einer bevorzugten Implementierung sind die Stützkörper aus gebogenen Tellerfedern zusammengesetzt. Die Tellerfedern sind insbesondere aus Federstahl. Vorzugsweise entspricht die Biegung der Stützkörper der radialen Ausdehnung des Dichtungsrings. In diesem Fall sind die Stützkörper kostengünstig realisierbar und die von den Stützkörpern bereitgestellten Radialkräfte lassen sich einfach ausgestalten. In einer bevorzugten Implementierung sind die ersten radialen Enden des ersten Stützkörpers als mindestens ein Streifenabschnitt ausgebildet, der sich im Wesentlichen entlang einer radialen Richtung erstreckt. Die ersten radialen Enden des ersten Stützkörpers sind als zwei, drei oder vier Streifenabschnitte ausgebildet, die sich im Wesentlichen entlang der radialen Richtung erstrecken. Dadurch werden Kontaktflächen zwischen den ersten radialen Enden der ersten Stützkörper und der leitfähigen Komponente nach Verschleiß der Dichtungslippe verringert, wodurch Reibungsschäden an der leitfähigen Komponente so weit wie möglich verringert werden. Vorzugsweise sind die ersten radialen Enden des ersten Stützkörpers als mindestens zwei Streifenabschnitte ausgebildet, die sich im Wesentlichen entlang der radialen Richtung erstrecken, wodurch die Kontaktstabilität der ersten radialen Enden an der leitfähigen Komponente sichergestellt ist und gleichzeitig kleine Kontaktflächen zwischen den ersten radialen Enden der ersten Stützkörper und der leitfähigen Komponente sichergestellt sind.

In einer bevorzugten Implementierung sind die zwei ersten Stützkörper der ersten Erkennungseinheit benachbart angeordnet. In diesem Fall ist zwischen den zwei ersten Stützkörpern kein weiterer Stützkörper bereitgestellt. Somit lässt sich eine Verschleißstelle des Dichtungsrings einfach und zuverlässig erkennen.

In einer bevorzugten Implementierung umfasst die Dichtungsvorrichtung mindestens zwei entlang der Umfangsrichtung des Dichtungsrings angeordnete erste Erkennungseinheiten. In diesem Fall können Informationen zum Verschleißzustand des Dichtungsrings an einer Vielzahl von Stellen in Umfangsrichtung umfassender erfasst werden.

In einer bevorzugten Implementierung umfasst die Dichtungsvorrichtung ferner zweite Erkennungseinheiten, wobei die zweiten Erkennungseinheiten jeweils einen zweiten Stützkörper in den Stützkörpern und Sensor umfassen, der durch den zweiten Stützkörper gestützt wird. In diesem Fall sind die zweiten Stützkörper insbesondere mit Aufnahmekonstruktionen, wie Aufnahmelöchern, zum Stützen und mindestens teilweise Aufnehmen der Sensoren ausgebildet. In diesem Fall können mindestens Sensorabschnitte der Sensoren in den Aufnahmekonstruktionen angeordnet sein. Somit können die zweiten Stützkörper die Sensoren weiter stützen, während sie die Radialkräfte an dem Dichtungsring bereitstellen; es wird verhindert, dass die Sensoren an einer Metallkomponente, wie einem Lagerelement, angebracht werden, das Anbringen der Sensoren wird vereinfacht und das Problem, dass das isolierende elastische Material des Dichtungsrings, wie ein Gummimaterial, nicht steif genug ist, um die Sensoren zu stützen, wird ebenfalls gelöst. Dabei weist eine Anlage, in der die Dichtungsvorrichtung angebracht ist, wie ein Windturbinenlager, einen hohen Grad an baulicher Integration auf und erfordert für die Anordnung nur wenig Platz. Dabei umfassen die zweiten Erkennungseinheiten optional ferner zweite Kabel, die elektrisch mit den Sensoren verbunden sind. Mittels der zweiten Kabel können beispielsweise die Sensoren mit Strom versorgt werden und von den Sensoren gemessene Betriebszustandsinformationen des Lagers oder der Dichtungsvorrichtung übertragen werden. Alternativ können als Sensoren der zweiten Erkennungseinheiten auch drahtlose Sensoren verwendet werden. Somit ist es nicht notwendig, zusätzlich eine Stromversorgungs- und/oder Datenübertragungsleitung bereitzustellen.

In einer bevorzugten Implementierung sind die Sensoren Temperatursensoren, Vibrationssensoren oder Drehgeschwindigkeitssensoren. Dabei können notwendige Zustandsüberwachungsinformationen betreffend den Betrieb des Lagers erfasst werden.

In einer bevorzugten Implementierung umfasst die Dichtungsvorrichtung mindestens zwei entlang der Umfangsrichtung des Dichtungsrings angeordnete zweite Erkennungseinheiten. Hier können optional gleichartige Betriebszustandsinformationen an unterschiedlichen Stellen in Umfangsrichtung der Dichtungsvorrichtung oder des Lagers erfasst werden, beispielsweise kann eine Temperaturmessung an unterschiedlichen Stellen in Umfangsrichtung durchgeführt werden. Alternativ oder zusätzlich können auch eine Vielfalt von Sensoren unterschiedlicher Art in einer Dichtungsvorrichtung integriert sein, wodurch gleichzeitig verschiedene Zustandsinformationen über den Betrieb des Lagers erfasst werden können.

Zusammenfassend kann die Dichtungswirkung verbessert werden, indem an dem Dichtungsring Radialkräfte bereitgestellt werden, und zwar durch eine Vielzahl von Metallstützkörpern, die in Umfangsrichtung des Dichtungsrings bereitgestellt sind. Vorzugsweise können die Stützkörper ferner als Bestandteil von Erkennungseinheiten zum Erkennen eines Verschleißes des Dichtungsrings dienen. Darüber hinaus können die Stützkörper auch als Stütze für eine Vielzahl von Sensoren dienen. Somit lässt sich eine Überwachung eines Betriebszustands des Lagers oder der Dichtungsvorrichtung einfach implementieren und eine Gesamtkonstruktion des Lagers und der Dichtungsvorrichtung kann auf kompakte Weise umgesetzt werden.

### Kurzbeschreibung der Zeichnungen

Im Folgenden werden in Bezug auf die beigefügten Zeichnungen Merkmale, Vorteile und technische Wirkungen beispielhafter Ausführungsformen der vorliegenden Anmeldung beschrieben.
FIG. 1 ist eine schematische Darstellung einer Dichtungsvorrichtung gemäß einer bevorzugten Implementierung;
FIG. 2 ist eine perspektivische Ansicht eines ersten Stützkörpers der Dichtungsvorrichtung gemäß FIG. 1;
FIG. 3 ist eine Teilquerschnittsansicht des ersten Stützkörpers der Dichtungsvorrichtung gemäß FIG. 1 in einem ersten Zustand;
FIG. 4 ist eine Teilquerschnittsansicht des ersten Stützkörpers der Dichtungsvorrichtung gemäß FIG. 1 in einem zweiten Zustand;
FIG. 5 ist eine perspektivische Ansicht eines zweiten Stützkörpers der Dichtungsvorrichtung gemäß FIG. 1; und
FIG. 6 ist eine perspektivische Querschnittsansicht des zweiten Stützkörpers der Dichtungsvorrichtung gemäß FIG. 1.

### Ausführliche Beschreibung von Ausführungsformen

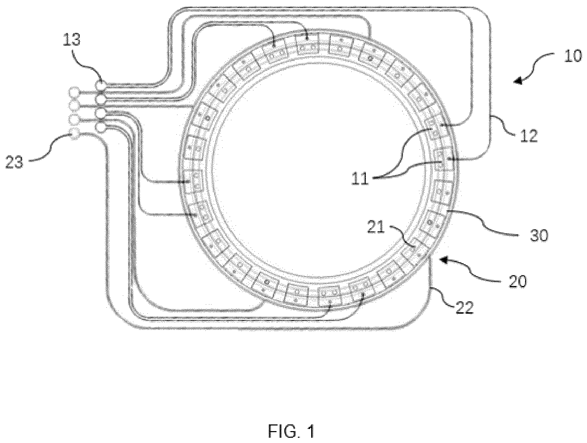

FIG. 1 zeigt eine schematische Darstellung einer Dichtungsvorrichtung gemäß einer bevorzugten Implementierung. Die Dichtungsvorrichtung in der vorliegenden Implementierung kann zum Abdichten eines Windturbinenlagers verwendet werden.

Wie in FIG. 1 gezeigt, umfasst die Dichtungsvorrichtung einen Dichtungsring 30, entlang einer Umfangsrichtung des Dichtungsrings 30 gleichmäßig verteilte Stützkörper, erste Erkennungseinheiten 10 und zweite Erkennungseinheiten 20.

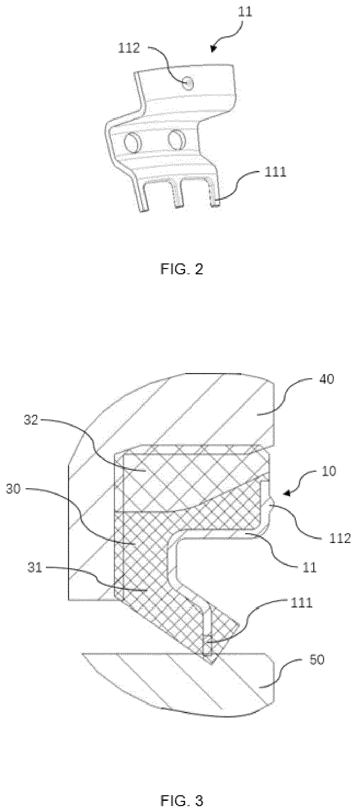

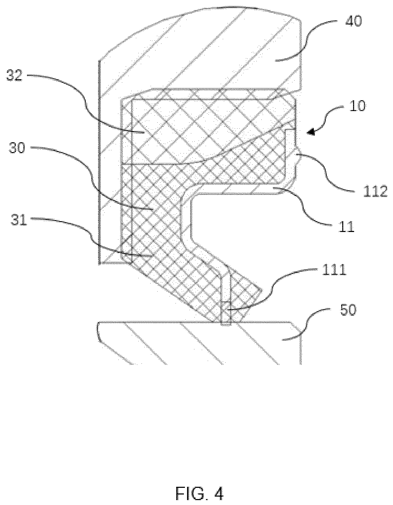

In der vorliegenden Implementierung umfasst der Dichtungsring 30 einen ringförmigen elastischen Dichtungskörper 31, der aus Gummi zusammengesetzt ist, und einen Gewebeabschnitt 32, der mit einer radial äußeren Seite des elastischen Dichtungskörpers 31 verbunden ist, wie gezeigt in den Teilquerschnittsansichten der Dichtungsvorrichtung in einem zusammengebauten Zustand in FIG. 3 und FIG. 4. Der Dichtungsring 30 ist über den Gewebeabschnitt 32 durch eine Presspassung an einem Außenring 40 eines Windturbinenlagers angebracht. Der elastische Dichtungskörper 31 des Dichtungsrings 30 ist an einer radial inneren Seite mit einer Dichtungslippe ausgebildet, und die Dichtungslippe liegt an einer äußeren Umfangsfläche eines Innenrings 50 des Windturbinenlagers aus Metall an, wodurch eine dynamische kontaktartige Dichtung gebildet wird.

In der vorliegenden Implementierung sind die Stützkörper aus gebogenen Tellerfedern zusammengesetzt, wobei die Tellerfedern insbesondere aus Federstahl sind. Dabei werden die gemeinsamen Merkmale aller Stützkörper der vorliegenden Implementierung unter Bezugnahme auf die in FIG. 2, FIG. 3 und FIG. 4 gezeigten ersten Stützkörper 11 erläutert und die Unterschiede zwischen den verschiedenen Stützkörpern werden später ausführlich erläutert. Wie in FIG. 2 bis FIG. 4 gezeigt, entspricht die Biegung der Stützkörper 11 der Ausdehnung des Dichtungsrings 30, insbesondere des elastischen Dichtungskörpers 31. Die Stützkörper 11 sind auf dem Dichtungsring 30 vorzugsweise aus Gummi, insbesondere dem elastischen Dichtungskörper 31, durch Vulkanisation befestigt. Die Stützkörper 11 weisen jeweils ein radiales Ende auf einer radial inneren Seite des Dichtungsrings 30 auf, d. h. ein erstes radiales Ende 111; und ein radiales Ende auf einer radial äußeren Seite des Dichtungsrings 30, d. h. ein zweites radiales Ende 112. Mittels der in den Tellerfedern, die die Stützkörper 11 bilden, gespeicherten potenziellen Energie können an dem Dichtungsring 30 Radialkräfte bereitgestellt werden, sodass ein Kopf des Dichtungsrings 30 gegen den Außenring 40 gedrückt werden kann und somit die Stabilität einer Presspassung zwischen dem Dichtungsring 30 und dem Außenring 40 verbessert wird; und die Dichtungslippe, vorzugsweise eine Hauptlippe, des Dichtungsrings 30 zuverlässig gegen den Innenring 50 gedrückt wird und somit eine Dichtungswirkung des Dichtungsrings verbessert werden kann. Darüber hinaus ist die Dichtungsvorrichtung besser auf große Lager, wie etwa Windflügellager, abgestimmt und verringert bzw. vermeidet dadurch potenzielle Probleme der Exzentrizität bei großen Lagern.

Die ersten Erkennungseinheiten 10 werden insbesondere dazu verwendet, einen Verschleißgrad der Dichtungslippe zu erkennen. Wie in FIG. 1 gezeigt, umfassen die ersten Erkennungseinheiten in der vorliegenden Implementierung jeweils zwei benachbart angeordnete Stützkörper, d. h. erste Stützkörper 11, erste Kabel 12, die jeweils elektrisch mit zweiten radialen Enden 112 der entsprechenden ersten Stützkörper 11 verbunden sind, und eine Schleifenerkennungsvorrichtung 13, die elektrisch mit jedem ersten Kabel 12 verbunden ist.

FIG. 3 zeigt eine Teilquerschnittsansicht des ersten Stützkörpers 11 der Dichtungsvorrichtung in einem unverschlissenen und einem leicht verschlissenen Zustand. Entsprechend zeigt FIG. 4 eine Teilquerschnittsansicht der Dichtungsvorrichtung im stark verschlissenen Zustand am ersten Stützkörper 11. Wie in FIG. 3 gezeigt, sind in der vorliegenden Implementierung die Stützkörper 11 teilweise mit einem isolierenden elastischen Material bedeckt. Insbesondere liegen die zweiten radialen Enden 112 der ersten Stützkörper 11 einer Oberfläche des elastischen Dichtungskörpers 31 des Dichtungsrings 30 gegenüber, und die ersten radialen Enden 111 der ersten Stützkörper 11 sind in einem frühen Stadium der Nutzungsdauer der Dichtungsvorrichtung mit einem Gummimaterial bedeckt oder in das Gummimaterial der Dichtungslippe eingebettet, sodass die ersten Stützkörper 11 bei Kontakt der Dichtungslippe mit dem Innenring 50 gegenüber dem Innenring 50 isoliert sind. In diesem Fall ist das Gummimaterial an den ersten radialen Enden 11 der ersten Stützkörper 11 derart ausgestaltet, dass nach einem vorbestimmten Verschleiß der Dichtungslippe, wie in FIG. 4 gezeigt, die entsprechenden ersten radialen Enden 111 der zwei ersten Stützkörper 11 beide direkt in Kontakt mit einer Oberfläche des Innenrings 50 treten können, sodass die zwei ersten Stützkörper 11 und der zwischen den zwei ersten Stützkörpern angeordnete Innenring 50 einen leitfähigen Pfad bilden können.

Dabei wird mittels der Schleifenerkennungsvorrichtung 13 erkannt, ob die zwei ersten Stützkörper 11 und der zwischen den zwei ersten Stützkörpern angeordnete Innenring 50 einen leitfähigen Pfad bilden, wodurch bestimmt wird, ob der Dichtungsring 30 einen Verschleißfehler aufweist, oder die Möglichkeit eines Verschleißfehlers bestimmt wird; und dann rechtzeitig entsprechende Maßnahmen ergriffen werden. Wie in FIG. 1 gezeigt, kann die Schleifenerkennungsvorrichtung insbesondere in der vorliegenden Implementierung als Kontrollleuchte mit einer Stromversorgungsvorrichtung ausgebildet sein. Bei unverschlissener oder leicht verschlissener Dichtungslippe erlischt die Kontrollleuchte, bei stark verschlissener Dichtungslippe hingegen kommt es zum direkten Kontakt der zwei ersten Stützkörper 11 mit dem Innenring 50, sodass ein Stromkreis gebildet werden kann und die Kontrollleuchte zu diesem Zeitpunkt aufleuchtet. Es versteht sich, dass der Fachmann die Schleifenerkennungsvorrichtung in jeder sinnvollen Weise entsprechend dem Stand der Technik ausbilden kann, um einen Aus- oder Ein-Zustand eines Stromkreises zu erkennen.

Gemäß der vorliegenden Implementierung sind, insbesondere wie in der perspektivischen Ansicht des ersten Stützkörpers 11 der Dichtungsvorrichtung gezeigt, die in FIG. 2 gezeigt ist, die ersten radialen Enden 111 des ersten Stützkörpers 11 als mehrere, hier drei, Streifenabschnitte ausgebildet, die sich im Wesentlichen entlang einer radialen Richtung erstrecken. Somit werden Kontaktflächen zwischen den ersten radialen Enden 111 der ersten Stützkörper 11 und dem Innenring 50 nach Verschleiß der Dichtungslippe reduziert, wodurch Reibungsschäden am Innenring 50 so weit wie möglich reduziert werden und die Kontaktstabilität der ersten radialen Enden 111 am Innenring 50 sichergestellt wird.

Gemäß der vorliegenden Implementierung umfasst die Dichtungsvorrichtung ferner zweite Erkennungseinheiten 20. Die zweiten Erkennungseinheiten 20 umfassen jeweils einen zweiten Stützkörper 21 in den Stützkörpern und einen Sensor 24, der durch den zweiten Stützkörper 21 gestützt wird.

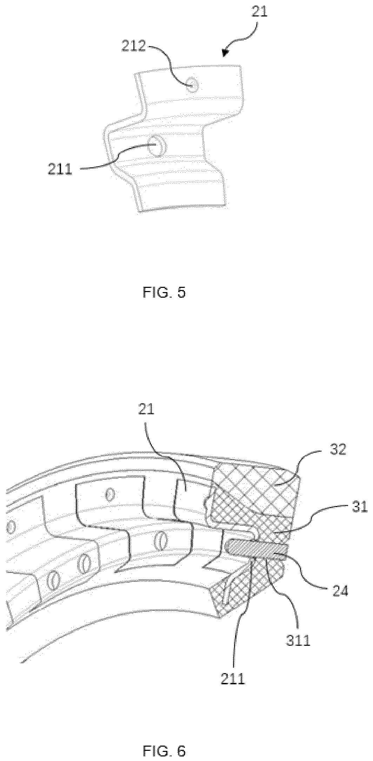

Dabei zeigt FIG. 5 eine perspektivische Ansicht des zweiten Stützkörpers 21 der Dichtungsvorrichtung; und FIG. 6 zeigt eine perspektivische Querschnittsansicht der Dichtungsvorrichtung am zweiten Stützkörper 21. Wie in FIG. 5 und FIG. 6 gezeigt, sind die zweiten Stützkörper 21 gegenüber den anderen Stützkörpern zusätzlich mit Aufnahmelöchern 211 zur Lagerung und mindestens teilweisen Aufnahme der Sensoren 24 ausgebildet. Die Sensoren 24 können beispielsweise Temperatursensoren, Vibrationssensoren oder Drehgeschwindigkeitssensoren sein. Somit können die zweiten Stützkörper 21 ferner als Stützträger für die Sensoren 24 dienen und gleichzeitig Radialkräfte auf den Dichtungsring 30 ausüben. Es versteht sich, dass entsprechend der spezifischen Größe und Konstruktion der Sensoren auch der elastische Dichtungskörper 31 des Dichtungsrings 30 entsprechend mit einem Aufnahmeabschnitt 311 zur Aufnahme der Sensoren 24 ausgebildet ist. Daher wird das Anbringen der Sensoren 24 an einer Metallkomponente, wie einem Lagerelement, verhindert und das Anbringen der Sensoren wird vereinfacht. In der vorliegenden Implementierung umfassen die zweiten Erkennungseinheiten 20 ferner zweite Kabel 22, die elektrisch mit den Sensoren 24 verbunden sind. Mittels der zweiten Kabel 22 können die Sensoren 24 mit Strom versorgt werden und von den Sensoren gemessene Zustandsinformationen des Lagers bzw. der Dichtungsvorrichtung können an eine Signalverarbeitungseinheit 23 übertragen werden.

Unter erneuter Bezugnahme auf FIG. 1 umfasst die Dichtungsvorrichtung gemäß der vorliegenden Implementierung eine Vielzahl von ersten Erkennungseinheiten 10 und eine Vielzahl von zweiten Erkennungseinheiten 20. Durch das Bereitstellen der Vielzahl von ersten Erkennungseinheiten 10 können Informationen über den Verschleißzustand des Dichtungsrings 30 an einer Vielzahl von Stellen in Umfangsrichtung umfassender erfasst werden. Darüber hinaus sind mittels der Vielzahl von zweiten Erkennungseinheiten 20 eine Vielfalt von Sensoren unterschiedlicher Art in der Dichtungsvorrichtung integriert, wodurch eine Vielfalt von Zustandsinformationen betreffend den Betrieb des Lagers gleichzeitig erfasst werden kann. Somit lässt sich eine Überwachung eines Betriebszustands des Lagers oder der Dichtungsvorrichtung einfach implementieren und eine Gesamtkonstruktion des Lagers und der Dichtungsvorrichtung kann auf kompakte Weise umgesetzt werden.

Darüber hinaus versteht es sich, dass die Stützkörper ferner einen dritten Stützkörper umfassen können, der sich von den ersten Stützkörpern und den zweiten Stützkörpern unterscheidet. Dabei dient der dritte Stützkörper vorwiegend zum Bereitstellen einer Radialkraft und ist nicht an der Überwachung des Betriebszustandes des Lagers oder der Dichtungsvorrichtung beteiligt. Es versteht sich ferner, dass ein Stützkörper vorhanden sein kann, der Funktionen und Konstruktionen der ersten Stützkörper und der zweiten Stützkörper integriert, d. h. der Stützkörper ist mit einem Stützträger zum Stützen des Sensors ausgebildet und kann einen Bestandteil einer Verschleißerkennungseinheit bilden.

Offensichtlich sind die vorstehend erwähnten Ausführungsformen der vorliegenden Erfindung nur beispielhaft, um die vorliegende Erfindung klar zu beschreiben, und nicht, um die Implementierungen der vorliegenden Erfindung einzuschränken. Für den Durchschnittsfachmann auf dem Gebiet können auf der Grundlage der oben genannten Beschreibung weitere unterschiedliche Formen von Änderungen oder Abwandlungen vorgenommen werden. Eine abschließende Auflistung aller Implementierungen ist weder notwendig noch möglich. Alle Modifikationen, äquivalenten Ersetzungen und Verbesserungen, die auf der Grundlage des Geistes und Prinzips der vorliegenden Erfindung vorgenommen werden, sollten in den Schutzumfang der Ansprüche der vorliegenden Erfindung einbezogen sein. Beispielsweise sind die Formen des Dichtungsrings 30 und der Stützkörper 11 und 12 nicht auf die in den Zeichnungen gezeigten Ausführungsformen beschränkt, und die Anordnungsarten der ersten Erkennungseinheiten und der zweiten Erkennungseinheiten in der Dichtungsvorrichtung sind ebenfalls nicht auf die in den Zeichnungen gezeigten Ausführungsformen beschränkt. Andere Lösungen, die die vorstehend erwähnten technischen Probleme angemessen lösen, fallen ebenfalls in den Schutzumfang der vorliegenden Erfindung.

In der Beschreibung hierin ist zu beachten, dass, sofern nicht ausdrücklich anders angegeben und eingeschränkt, die Begriffe "axiale Richtung", "radiale Richtung" und "Umfangsrichtung" alle auf einer Mittelachse des Dichtungsrings basieren. Insbesondere ist die "axiale Richtung" eine Verlängerungsrichtung der Mittelachse des Dichtungsrings oder eine Richtung, die parallel zur Mittelachse verläuft; die "radiale Richtung" ist eine Richtung, die senkrecht zur Mittelachse des Dichtungsrings verläuft und die Mittelachse schneidet; und die "Umfangsrichtung" ist eine Richtung um die Mittelachse des Dichtungsrings herum.

Des Weiteren werden die Begriffe "erste" und "zweite" nur zu beschreibenden Zwecken verwendet und sollten nicht als Hinweis oder Andeutung einer relativen Wichtigkeit verstanden werden.

### Liste der Bezugszeichen

- 10: Erste Erkennungseinheit
- 11: Erster Stützkörper
- 111: Erstes radiales Ende
- 112: Zweites radiales Ende
- 12: Erstes Kabel
- 13: Schleifenerkennungsvorrichtung

- 20: Zweite Erkennungseinheit
- 21: Zweiter Stützkörper
- 22: Zweites Kabel
- 23: Signalverarbeitungseinheit
- 24: Sensor

- 30: Dichtungsring
- 31: Elastischer Dichtungskörper
- 32: Gewebeabschnitt

## Patentansprüche

1. Dichtungsvorrichtung, umfassend:
einen Dichtungsring (30), umfassend eine Dichtungslippe, die aus einem isolierenden elastischen Material zusammengesetzt ist und zum Bilden einer dynamischen Abdichtung in Bezug auf eine leitfähige Komponente (50) verwendet wird;
Stützkörper (11, 21) aus Metall, wobei die Stützkörper (11, 21) entlang einer Umfangsrichtung des Dichtungsrings (30) verteilt am Dichtungsring (30) befestigt sind und Radialkräfte an der Dichtungslippe gegen die leitfähige Komponente (50) bereitstellen; und
eine erste Erkennungseinheit (10), umfassend zwei erste Stützkörper (11) in den Stützkörpern, erste Kabel (12), die jeweils elektrisch mit den entsprechenden ersten Stützkörpern (11) verbunden sind, und eine Schleifenerkennungsvorrichtung (13), die elektrisch mit jedem ersten Kabel (12) verbunden ist,
wobei die ersten Stützkörper (11) derart am Dichtungsring (30) angeordnet sind, dass radiale Enden (111) der ersten Stützkörper (11) nahe der leitfähigen Komponente (50) an der Dichtungslippe mit einem isolierenden elastischen Material bedeckt sind und nach Verschleiß der Dichtungslippe direkt mit der leitfähigen Komponente (50) in Kontakt treten können, sodass nach einem vorbestimmten Verschleiß der Dichtungslippe die zwei ersten Stützkörper (11), die leitfähige Komponente (50), die Schleifenerkennungsvorrichtung (13) und die ersten Kabel (12) gemeinsam eine Kommunikationsschleife bilden, die von der Schleifenerkennungsvorrichtung (13) erkannt werden kann.

2. Dichtungsvorrichtung nach Anspruch 1, wobei die Dichtungslippe an einer radial inneren Seite des Dichtungsrings (30) ausgebildet ist.

3. Dichtungsvorrichtung nach Anspruch 1, wobei der Dichtungsring (30) ferner einen Gewebeabschnitt (32) umfasst, wobei der Gewebeabschnitt an einem radialen Ende des Dichtungsrings (30) entfernt von der leitfähigen Komponente (50) angeordnet ist.

4. Dichtungsvorrichtung nach Anspruch 1, wobei die Stützkörper (11, 12) aus gebogenen Tellerfedern zusammengesetzt sind.

5. Dichtungsvorrichtung nach Anspruch 4, wobei ein erstes radiales Ende (111) des ersten Stützkörpers (11) als mindestens ein Streifenabschnitt ausgebildet ist, der sich im Wesentlichen entlang einer radialen Richtung erstreckt.

6. Dichtungsvorrichtung nach Anspruch 1, wobei die zwei ersten Stützkörper (11) der ersten Erkennungseinheit (10) benachbart angeordnet sind.

7. Dichtungsvorrichtung nach Anspruch 1, wobei die Dichtungsvorrichtung mindestens zwei erste Erkennungseinheiten (10) umfasst, die entlang der Umfangsrichtung des Dichtungsrings (30) angeordnet sind.

8. Dichtungsvorrichtung nach Anspruch 1, wobei die Dichtungsvorrichtung ferner zweite Erkennungseinheiten (20) umfasst, wobei die zweiten Erkennungseinheiten (20) jeweils einen zweiten Stützkörper (21) in den Stützkörpern und einen Sensor (24) umfassen, der durch den zweiten Stützkörper (21) gestützt wird.

9. Dichtungsvorrichtung nach Anspruch 8, wobei die Sensoren (24) Temperatursensoren, Vibrationssensoren und/oder Drehgeschwindigkeitssensoren sind.

10. Dichtungsvorrichtung nach Anspruch 8, wobei die Dichtungsvorrichtung mindestens zwei zweite Erkennungseinheiten (20) umfasst, die entlang der Umfangsrichtung des Dichtungsrings (30) angeordnet sind.
